# EUROPEAN PATENT APPLICATION

(11) **EP 4 451 784 A1**
(43) Date of publication of application: **23.10.2024**
(21) Application number: 21967511.3
(22) Date of filing: 13.12.2021
(51) Int. Cl.: H04W 74/08

(54) **RESOURCE DETERMINATION METHOD AND APPARATUS**

(71) Applicant: Beijing Xiaomi Mobile Software Co., Ltd., Beijing 100085 (CN)
(72) Inventor: LIU, Xiaofei, Beijing 100085 (CN); JIANG, Xiaowei, Beijing 100085 (CN)
(74) Representative: Zimmermann, Tankred Klaus
(86) International application number: PCT/CN2021/137565
(87) International publication number: WO 2023/108369

(57) **Abstract**

Embodiments of the present invention disclose a resource determination method and apparatus. The method is executed by a terminal, and comprises: a terminal receiving first configuration information of a network device that is used for indicating at least one contention based random access (CBRA) configuration in a first version, and then the terminal being capable of determining a target available RACH occasion (RO) set according to the first configuration information, and/or determining a target shared RO resource according to the first configuration information, and/or determining a target preamble set according to the first configuration information, so as to achieve communication with a network device on a determined resource.

## Description

### FIELD

The present invention relates to the field of communication technology, and particularly to a method and an apparatus for determining a resource.

### BACKGROUND

The 3rd generation partnership project (3GPP) Release 17 provides some new features for sharing a random access channel occasion (RO) resource to enable a network device to perform early feature identification.

### SUMMARY

Embodiments of the present invention provide a method and an apparatus for determining a resource to enable a terminal to determine a corresponding resource for communicating with a network device in a shared random access channel occasion (RO) scenario.

In a first aspect, embodiments of the present invention provide a method for determining the resource, performed by the terminal, including: receiving first configuration information from the network device, where the first configuration information indicates at least one contention-based random access (CBRA) configuration in a first version; and determining a target available RO set according to the first configuration information; and/or determining a target shared RO resource according to the first configuration information; and/or determining a target preamble set according to the first configuration information.

In this technical solution, the terminal receives the first configuration information from the network device, where the first configuration information indicates the at least one CBRA configuration in the first version; and the target available RO set is determined according to the first configuration information; and/or the target shared RO resource is determined according to the first configuration information; and/or the target preamble set is determined according to the first configuration information. In this way, the terminal may determine the target available RO set and/or the target shared RO resource and/or the target preamble set to communicate with the network device according to determined resources.

In a second aspect, embodiments of the present invention provide a method for determining a resource, performed by a network device, including: sending first configuration information, where the first configuration information indicates at least one CBRA configuration in the first version.

In a third aspect, embodiments of the present invention provide a communication apparatus having some or all of the functions of the terminal for implementing the method as described in the first aspect above. For example, the communication apparatus may have functions as described in some or all the embodiments in the present invention, or may have functions for implementing any of embodiments of the present invention alone. The functions may be implemented by hardware or software executed on corresponding hardware. The hardware or software includes one or more units or modules corresponding to the functions described above.

In an implementation, the communication apparatus may include a transceiving module and a processing module in structure. The processing module is configured to support the communication apparatus to perform the corresponding functions of the method described above. The transceiving module is configured to support communications between the communication apparatus and other devices. The communication apparatus may further include a storage module for coupling with the transceiving module and the processing module, and storing computer programs and data necessary for the communication apparatus.

In an implementation, the communication apparatus includes: the transceiving module configured to receive first configuration information from a network device, where the first configuration information indicates at least one CBRA configuration in a first version; and the processing module configured to determine a target available RO set according to the first configuration information; and/or determine a target shared RO resource according to the first configuration information; and/or determine a target preamble set according to the first configuration information.

In a fourth aspect, embodiments of the present invention provide a communication apparatus having some or all of the functions of the network device for implementing the method as described in the second aspect above. For example, the communication apparatus may have functions as described in some or all of the embodiments of the present invention, or may have functions for implementing any of embodiments of the present invention alone. The functions may be implemented by hardware or software executed on corresponding hardware. The hardware or software includes one or more units or modules corresponding to the functions described above.

In an implementation, the communication apparatus may include a transceiving module and a processing module in the structure. The processing module is configured to support the communication apparatus to perform the corresponding functions of the method described above. The transceiving module is configured to support communications between the communication apparatus and other devices. The communication apparatus may further include a storage module for coupling with the transceiving module and the processing module, and storing the computer programs and the data necessary for the communication apparatus.

For example, the processing module may be a processor, the transceiving module may be a transceiver or a communication interface, and the storage module may be a memory.

In an implementation, the communication apparatus may include the transceiving module configured to send the first configuration information, where the first configuration information indicates the at least one CBRA configuration in the first version.

In a fifth aspect, embodiments of the present invention provide a communication device including a processor that, when invoking a computer program in a memory, performs the method as described in the first aspect above.

In a sixth aspect, embodiments of the present invention provide a communication device including a processor that, when invoking a computer program in a memory, performs the method as described in the second aspect above.

In a seventh aspect, embodiments of the present invention provide a communication device including a processor, and a memory having stored therein a computer program. The processor is configured to perform the computer program stored in the memory to enable the communication device to implement the method as described in the first aspect above.

In an eighth aspect, embodiments of the present invention provide a communication device including a processor, and a memory having stored therein a computer program. The processor is configured to perform the computer program stored in the memory to enable the communication device to implement the method as described in the second aspect above.

In a ninth aspect, embodiments of the present invention provide a communication device including a processor and an interface circuit. The interface circuit is configured to receive code instructions and transmit the code instructions to the processor, and the processor is configured to run the code instructions to enable the communication device to implement the method as described in the first aspect above.

In a tenth aspect, embodiments of the present invention provide a communication device including a processor and an interface circuit. The interface circuit is configured to receive code instructions and transmit the code instructions to the processor, and the processor is configured to run the code instructions to enable the communication device to implement the method as described in the second aspect above.

In an eleventh aspect, embodiments of the present invention provides a system for determining a resource, and the system includes the communication apparatus of the third aspect and the communication apparatus of the fourth aspect, or the system includes the communication device of the fifth aspect and the communication device of the sixth aspect, or the system includes the communication device of the seventh aspect and the communication device of the eighth aspect, or the system includes the communication device of the ninth aspect and the communication device of the tenth aspect.

In a twelfth aspect, embodiments of the present invention provide a computer readable storage medium having stored therein instructions used by the terminal above. The instructions, when executed, enable the terminal to implement the method as described in the first aspect above.

In a thirteenth aspect, embodiments of the present invention provide a readable storage medium having stored therein instructions used by the network device above. The instructions, when executed, enable the network device to implement the method as described in the second aspect above.

In a fourteenth aspect, the present invention further provides a computer program product including a computer program that, when run on a computer, enables the computer to perform the method as described in the first aspect above.

In a fifteenth aspect, the present invention further provides a computer program product including a computer program that, when run on the computer, enables the computer to perform the method as described in the second aspect above.

In a sixteenth aspect, the present invention provides a chip system including at least one processor and an interface for supporting a terminal to implement the functions of the first aspect, e.g. to determine or process at least one of data and information involved in the method described above. In one possible design, the chip system further includes a memory for storing the computer program and the data necessary for the terminal. The chip system may be composed of chips or may include chips and other discrete devices.

In a seventeenth aspect, the present invention provides a chip system including at least one processor and an interface for supporting a network device to implement the functions of the second aspect, e.g. to determine or process at least one of the data and information involved in the method described above. In one possible design, the chip system further includes a memory for storing the computer program and the data necessary for the network device. The chip system may be composed of chips or may include chips and other discrete devices.

In an eighteenth aspect, the present invention provides a computer program that, when run on a computer, enables the computer to perform the method as described in the first aspect above.

In a nineteenth aspect, the present invention provides a computer program that, when run on a computer, enables the computer to perform the method as described in the second aspect above.

### BRIEF DESCRIPTION OF THE DRAWINGS

In order to clearly illustrate technical solutions in embodiments of the present invention or in the background, drawings to be used in embodiments of the present invention or in the background will be described below.
FIG. 1 is a schematic diagram illustrating an architecture of a communication system according to embodiments of the present invention;
FIG. 2 is a flowchart illustrating a method for determining a resource according to embodiments of the present invention;
FIG. 3 is a flowchart illustrating another method for determining a resource according to embodiments of the present invention;
FIG. 4 is a flowchart illustrating a further method for determining a resource according to embodiments of the present invention;
FIG. 5 is a flowchart illustrating a further method for determining a resource according to embodiments of the present invention;
FIG. 6 is a flowchart illustrating a further method for determining a resource according to embodiments of the present invention;
FIG. 7 is a flowchart illustrating a further method for determining a resource according to embodiments of the present invention;
FIG. 8 is a flowchart illustrating a further method for determining a resource according to embodiments of the present invention;
FIG. 9 is a flowchart illustrating a further method for determining a resource according to embodiments of the present invention;
FIG. 10 is a flowchart illustrating a further method for determining a resource according to embodiments of the present invention;
FIG. 11 is a flowchart illustrating a further method for determining a resource according to embodiments of the present invention;
FIG. 12 is a flowchart illustrating a further method for determining a resource according to embodiments of the present invention;
FIG. 13 is a flowchart illustrating a further method for determining a resource according to embodiments of the present invention;
FIG. 14 is a block diagram illustrating a communication apparatus according to embodiments of the present invention;
FIG. 15 is a block diagram illustrating a communication device according to embodiments of the present invention; and
FIG. 16 is a block diagram illustrating a chip according to embodiments of the present invention.

### DETAILED DESCRIPTION

In order to better understand a method for determining a resource disclosed in embodiments of the present invention, a communication system used in embodiments of the present invention is first described below.

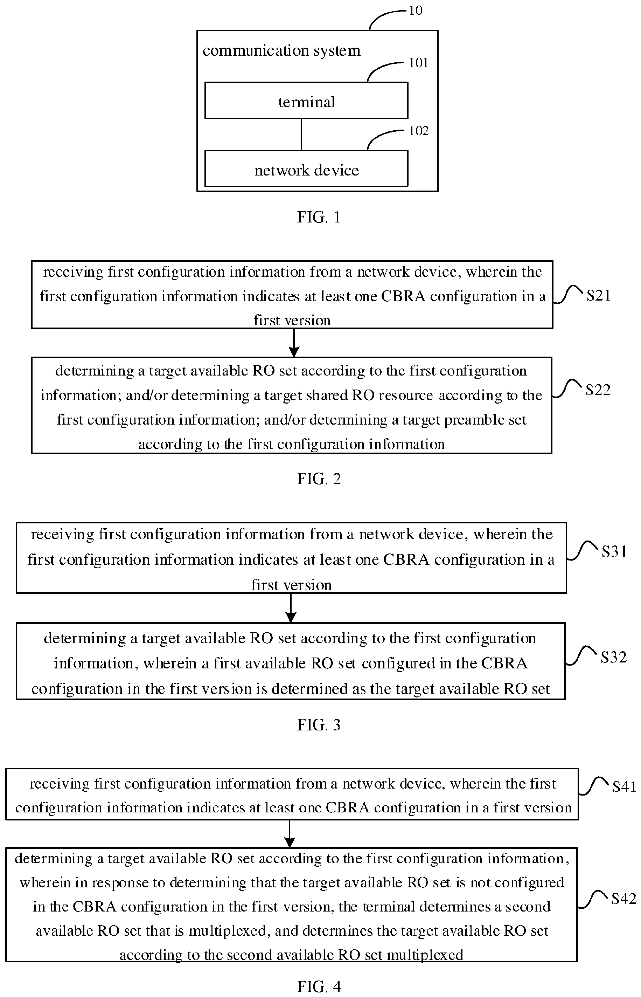

Referring to FIG. 1, FIG. 1 is a schematic diagram illustrating an architecture of a communication system 10 according to embodiments of the present invention. The communication system 10 may include, but is not limited to, a network device and a terminal. The number and form of the devices shown in FIG. 1 are merely used as an example, and do not constitute a limitation on embodiments of the present invention. In practical applications, two or more network devices and two or more terminals may be included. The communication system 10 shown in FIG. 1 is illustrated as an example where one network device 101 and one terminal 102 are included.

It should be noted that the technical solutions of embodiments of the present invention may be applied to various communication systems, such as a long term evolution (LTE) system, a 5th generation (5G) mobile communication system, a 5G new radio (NR) system, or other new mobile communication systems in the future.

The network device 101 in embodiments of the present invention is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit specific technology and specific device form used by the network device. The network device according to embodiments of the present invention may be composed of a central unit (CU) and distributed units (DUs), and the CU may also be referred to as a control unit. Using the CU-DU structure allows to split a protocol layer of the network device, such as a base station, a part of functions of the protocol layer is centrally controlled in the CU, some or all of the remaining functions of the protocol layer are distributed in the DUs, and the CU centrally controls the DUs.

The terminal 102 in embodiments of the present invention is an entity at a user side for receiving or transmitting signals, such as a mobile phone. The terminal device may also be referred to as a terminal, a user equipment (UE), a mobile station (MS), or a mobile terminal (MT). The terminal device may be a device with a communication function, such as an automobile, a smart automobile, a mobile phone, a wearable device, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home. Embodiments of the present invention do not limit the specific technology and the specific device form used by the network device.

It may be understood that the communication system described in embodiments of the present invention is for a purpose of describing the technical solutions of embodiments of the present invention more clearly, and does not constitute a limitation on the technical solutions according to embodiments of the present invention. It may be understood by those skilled in the art that with the evolution of the system architecture and the emergence of new service scenarios, the technical solutions according to embodiments of the present invention are also applicable to similar technical problems.

The method and apparatus for determining the resource provided in the present invention will be described in detail below with reference to the accompanying drawings.

Referring to FIG. 2, FIG. 2 is a flowchart illustrating a method for determining the resource according to embodiments of the present invention.

As shown in FIG. 2, the method, performed by the terminal, may include, but is not limited to, following steps.

In S21, first configuration information is received from the network device, where the first configuration information indicates at least one contention-based random access (CBRA) configuration in a first version.

In embodiments of the present invention, the CBRA configuration in the first version includes: a 4-step CBRA configuration in the first version and/or a 2-step CBRA configuration in the first version, where the first version is Release 17.

In embodiments of the present invention, the first version may include at least one CBRA configuration, where each CBRA configuration may correspond to a feature or combinations of features. The feature or combinations of features may include: one or more of a reduced capability (Redcap) feature, a small data transmission (SDT) feature, a network slicing (Slice) feature and a coverage enhancement (CE) feature.

In embodiments of the present invention, the network device sends the first configuration information via a broadcast system information, where the broadcast system information may be a system information block (SIB) x, where x is a positive integer, and the SIB x may be an existing system information or a newly defined system information. For example, in one embodiment of the present invention, the SIB x may be an existing SIB 1.

In some embodiments, the CBRA configuration in the first version is a common CBRA configuration of multiple different features or combinations of features in the first version or a specific CBRA configuration of multiple different features or combinations of features in the first version, where the common CBRA configuration at least includes a configuration of a target shared random access channel occasion (RO) resource and/or a configuration of a target available RO set.

In some embodiments, the target available RO set of the CBRA configuration in the first version is adapted to at least one of the features or the combinations of features in response to determining that the CBRA configuration in the first version is the specific CBRA configuration of the multiple different features or the combinations of features in the first version.

In S22, the target available RO set is determined according to the first configuration information; and/or a target shared RO resource is determined according to the first configuration information; and/or a target preamble set is determined according to the first configuration information.

In embodiments of the present invention, the terminal may determine the target available RO set according to the first configuration information, may further determine the target shared RO resource according to the first configuration information, and may further determine the target preamble set according to the first configuration information.

By implementing embodiments of the present invention, the terminal receives the first configuration information from the network device, where the first configuration information indicates the at least one CBRA configuration in the first version; and the terminal determines the target available RO set according to the first configuration information, and/or determines the target shared RO resource according to the first configuration information, and/or determines the target preamble set according to the first configuration information. In this way, the terminal may determine the target available RO set or the target shared RO resource or the target preamble set to communicate with the network device based on determined resources.

Referring to FIG. 3, FIG. 3 is a flowchart illustrating another method for determining a resource according to embodiments of the present invention.

As shown in FIG. 3, the method, performed by the terminal, may include, but is not limited to, following steps.

In S31, the first configuration information is received from the network device, where the first configuration information indicates the at least one CBRA configuration in the first version.

The description of S31 in embodiments of the present invention may be referred to the description of S21 in the above-mentioned embodiments, and will not be repeated here.

In S32, the target available RO set is determined according to the first configuration information, where a first available RO set configured in the CBRA configuration in the first version is determined as the target available RO set.

It will be appreciated that, the terminal may directly determine the target available RO set according to the CBRA configuration in the first version in a case where the terminal determines that the first available RO set is configured in the CBRA configuration in the first version.

It should be noted that S31 and S32 may be implemented separately, or may be implemented together with any other step in accordance with embodiments of the present invention, for example, implemented together with S21 and S22 in accordance with embodiments of the present invention, and embodiments of the present invention are not limited thereto.

Referring to FIG. 4, FIG. 4 is a flowchart illustrating another method for determining a resource according to embodiments of the present invention.

As shown in FIG. 4, the method, performed by the terminal, may include, but is not limited to, following steps.

In S41, the first configuration information is received from the network device, where the first configuration information indicates the at least one CBRA configuration in the first version.

The description of S41 in embodiments of the present invention may be referred to the description of S21 in the above-mentioned embodiment, and will not be repeated here.

In S42, the target available RO set is determined according to the first configuration information, where it is responded to that the target available RO set is not configured in the CBRA configuration in the first version, and a second available RO set that is multiplexed is determined by the terminal, and the target available RO set is determined according to the second available RO set multiplexed.

It will be appreciated that, the terminal may determine whether the second available RO set multiplexed exists in the case where the terminal determines that the target available RO set is not configured in the CBRA configuration in the first version, and may determine the target available RO set according to the multiplexed second available RO set in a case where the second available RO set is multiplexed.

In some embodiments, the second available RO set is at least one of: an available RO set configured in the at least one CBRA configuration in the first version; an available RO set configured in at least one CBRA configuration in a second version, where the second version is Release 15 and/or Release 16.

In some embodiments, the terminal receives second configuration information from the network device, and determines the target available RO set according to the second configuration information. The terminal determines the target available RO set according to a first shared RO resource and the multiplexed second available RO set in response to the second configuration information indicating the first shared RO resource.

In some embodiments, the terminal receives the second configuration information from the network device, and determines the target available RO set according to the second configuration information. The terminal determines the multiplexed second available RO set as the target available RO set in response to the second configuration information not indicating the first shared RO resource.

In embodiments of the present invention, the first shared RO resource configured by the network device may be a mapping relationship between a shared RO resource configured by the network device and a feature, and thus the terminal may determine the first shared RO resource according to the mapping relationship between the shared RO resource and the feature.

In some embodiments, the first shared RO resource may further be determined according to a protocol provision, for example, a protocol stipulates a first shared RO resource corresponding to SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In embodiments of the present invention, the network device sends the second configuration information via the broadcast system information, where the broadcast system information may be the system information block (SIB) x, where x is the positive integer, and the SIB x may be the existing system information or the newly defined system information.

For example, in one embodiment of the present invention, the SIB x may be the existing SIB 1.

In some embodiments, the second configuration information and the first configuration information both correspond to the CBRA configuration in the first version.

It should be noted that S41 and S42 may be implemented separately, or may be implemented together with any other step in accordance with embodiments of the present invention, for example, implemented together with S21 and S22 and/or S31 and S32 in accordance with embodiments of the present invention, and embodiments of the present invention are not limited thereto.

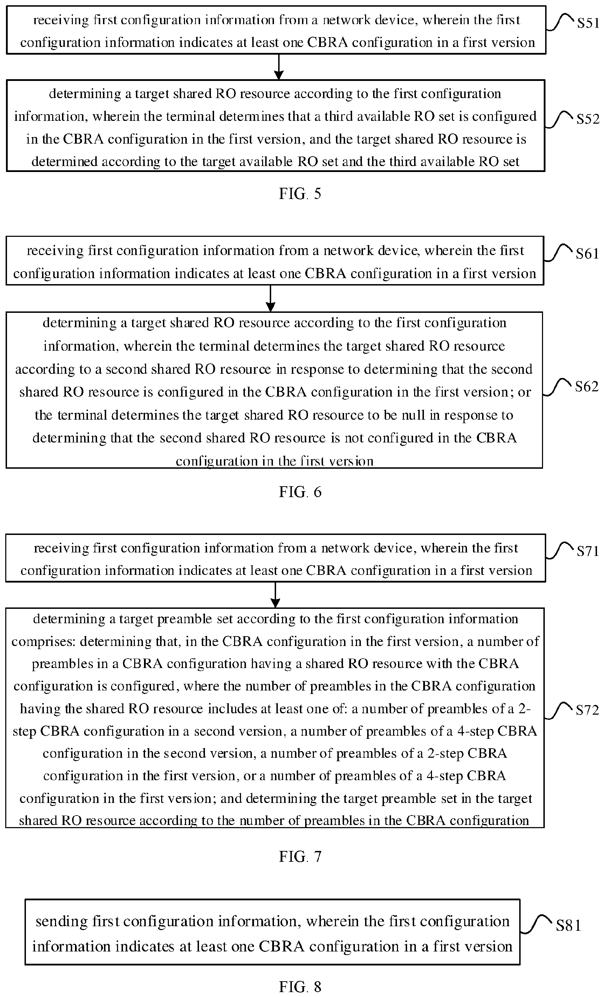

Referring to FIG. 5, FIG. 5 is a flowchart illustrating another method for determining a resource according to embodiments of the present invention.

As shown in FIG. 5, the method, performed by the terminal, may include, but is not limited to, following steps.

In S51, the first configuration information is received from the network device, where the first configuration information indicates the at least one CBRA configuration in the first version.

The description of S51 in embodiments of the present invention may be referred to the description of S21 in the above-mentioned embodiment, and will not be repeated here.

In S52, the target shared RO resource is determined according to the first configuration information, where the terminal determines that a third available RO set is configured in the CBRA configuration in the first version; and the target shared RO resource is determined according to the target available RO set and the third available RO set.

In some embodiments, the CBRA configuration in the first version is the common CBRA configuration of the multiple different features or combinations of features in the first version or the specific CBRA configuration of the multiple different features or combinations of features in the first version, where the common CBRA configuration at least includes the configuration of the target shared RO resource and/or the configuration of the target available RO set.

In some embodiments, the CBRA configuration in the first version is the common CBRA configuration, and a target available RO set corresponding to the features or the combinations of features is determined according to a third available RO set corresponding to the features or the combinations of features.

It may be understood that, in embodiments of the present invention, the third available RO set is an available RO set of other features which may be shared by the terminal, and the target available RO set is an available RO set corresponding to the terminal. Furthermore, it may be determined, according to the available RO set corresponding to the terminal (i.e., corresponding to the target available RO set) and the available RO set of other features (i.e., corresponding to the third available RO set), whether the shared RO resource exists; and the shared RO resource is determined as the target shared RO resource in a case where the shared RO resource exists.

It should be noted that S51 and S52 may be implemented separately, or may be implemented together with any other step in accordance with embodiments of the present invention, for example, implemented together with S21 and S22 and/or S31 and S32 and/or S41 and S42 in accordance with embodiments of the present invention, and embodiments of the present invention are not limited thereto.

Referring to FIG. 6, FIG. 6 is a flowchart illustrating another method for determining a resource according to embodiments of the present invention.

As shown in FIG. 6, the method, performed by the terminal, may include, but is not limited to, following steps.

In S61, the first configuration information is received from the network device, where the first configuration information indicates the at least one CBRA configuration in the first version.

The description of S61 in embodiments of the present invention may be referred to the description of S21 in the above-mentioned embodiment, and will not be repeated here.

In S62, the target shared RO resource is determined according to the first configuration information, where the terminal determines the target shared RO resource according to a second shared RO resource in response to determining that the second shared RO resource is configured in the CBRA configuration in the first version; or the terminal determines that the target shared RO resource is null in response to determining that the second shared RO resource is not configured in the CBRA configuration in the first version.

In embodiments of the present invention, the second available RO set is the at least one of: the available RO set configured in the at least one CBRA configuration in the first version; the available RO set configured in the at least one CBRA configuration in the second version, where the second version is Release 15 and/or Release 16.

It should be noted that S61 and S62 may be implemented separately, or may be implemented together with any other step in accordance with embodiments of the present invention, for example, implemented together with S21 and S22 and/or S31 and S32 and/or S41 and S42 and/or S51 and S52 in accordance with embodiments of the present invention, and embodiments of the present invention are not limited thereto.

Referring to FIG. 7, FIG. 7 is a flowchart illustrating another method for determining a resource according to embodiments of the present invention.

As shown in FIG. 7, the method, performed by the terminal, may include, but is not limited to, following steps.

In S71, the first configuration information is received from the network device, where the first configuration information indicates the at least one CBRA configuration in the first version.

The description of S71 in embodiments of the present invention may be referred to the description of S21 in the above-mentioned embodiment, and will not be repeated here.

In S72, the target preamble set is determined according to the first configuration information, which includes: determining that, in the CBRA configuration in the first version, a number of preambles in a CBRA configuration having a shared RO resource with the CBRA configuration is configured, where the number of preambles in the CBRA configuration having the shared RO resource includes at least one of: a number of preambles of a 2-step CBRA configuration in a second version, a number of preambles of a 4-step CBRA configuration in the second version, a number of preambles of a 2-step CBRA configuration in the first version, or a number of preambles of a 4-step CBRA configuration in the first version; and determining the target preamble set in the target shared RO resource according to the number of preambles in the CBRA configuration.

In some embodiments, determining, by the terminal, the target preamble set in the target shared RO resource includes: determining that a starting position of the target preamble set is located after a preamble set of the 4-step CBRA configuration in the second version in response to determining that the CBRA configuration in the first version has a common available RO set with the 4-step CBRA configuration in the second version.

In some embodiments, determining, by the terminal, the target preamble set in the target shared RO resource includes: determining that a starting position of the target preamble set is located after a preamble set of the 2-step CBRA configuration in the second version in response to determining that the CBRA configuration in the first version has a common available RO set with the 2-step CBRA configuration in the second version.

In some embodiments, determining, by the terminal, the target preamble set in the target shared RO resource includes: determining that a starting position of a preamble set of the 2-step CBRA configuration in the first version is located after the preamble set of the 4-step CBRA configuration in the first version in response to determining that the 2-step CBRA configuration in the first version in the CBRA configuration in the first version has a common available RO set with the 4-step CBRA configuration in the first version.

It should be noted that S71 and S72 may be implemented separately, or may be implemented together with any other step in accordance with embodiments of the present invention, for example, implemented together with S21 and S22 and/or S31 and S32 and/or S41 and S42 and/or S51 and S52 and/or S61 and S62 in accordance with embodiments of the present invention, and embodiments of the present invention are not limited thereto.

In order to facilitate understanding, embodiments of the present invention are exemplified by the following examples.

In one embodiment, the terminal receives the first configuration information from the network device, where the first configuration information indicates the at least one CBRA configuration in the first version; and the target available RO set is determined according to the first configuration information; and/or the target shared RO resource is determined according to the first configuration information; and/or the target preamble set is determined according to the first configuration information.

In embodiments of the present invention, the network device sends the first configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In some embodiments, in embodiments of the present invention, the first version may include at least one CBRA configuration, the CBRA configuration in the first version is the common CBRA configuration of the multiple different features or combinations of features in the first version or the specific CBRA configuration of the multiple different features or combinations of features in the first version, where the common CBRA configuration at least includes the configuration of the target shared RO resource and/or the configuration of the target available RO set.

The feature or combinations of features may include: one or more of the Redcap feature, the SDT feature, the Slice feature and the CE feature.

In embodiments of the present invention, the terminal receives the first configuration information from the network device, where the first configuration information indicates the at least one CBRA configuration in the first version; and the target available RO set is determined according to the first configuration information; and/or the target shared RO resource is determined according to the first configuration information; and/or the target preamble set is determined according to the first configuration information, so that the terminal may determine used resources to communicate with the network device.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; and/or the target available RO set is determined according to the first configuration information; and/or the target shared RO resource is determined according to the first configuration information; and/or the target preamble set is determined according to the first configuration information.

In embodiments of the present invention, the terminal receives the first configuration information including the 4-step CBRA configuration in the first version from the network device, and determines a corresponding resource to communicate with the network device.

Regarding relevant description of embodiments of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; and/or the target shared RO resource is determined according to the first configuration information; and/or the target preamble set is determined according to the first configuration information.

In embodiments of the present invention, the terminal receives the first configuration information including the 2-step CBRA configuration in the first version from the network device, and determines a corresponding resource to communicate with the network device.

Regarding the relevant description of embodiments of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target available RO set is determined according to the first configuration information; where the first available RO set is determined as a target available RO set of the 4-step CBRA configuration in the first version in response to determining that the first available RO set of the 4-step CBRA configuration in the first version is configured in the CBRA configuration in the first version.

In some embodiments of the present invention, the method further includes determining the target shared RO resource according to the first configuration information, including: determining a second shared RO resource as the target shared RO resource in response to determining that the second shared RO resource for (i.e., shared by) the 4-step CBRA configuration in the first version and the 2-step CBRA configuration in the second version is configured in the CBRA configuration in the first version. Alternatively, the target shared RO resource for the 4-step CBRA configuration in the first version and the 2-step CBRA configuration in the second version is determined to be null in response to determining that the second shared RO resource for the 4-step CBRA configuration in the first version and the 2-step CBRA configuration in the second version is not configured in the CBRA configuration in the first version.

In further embodiments of the present invention, the method further includes determining the target shared RO resource according to the first configuration information, including: determining the second shared RO resource as the target shared RO resource in response to determining that the second shared RO resource for the 4-step CBRA configuration in the first version and the 4-step CBRA configuration in the second version is configured in the CBRA configuration in the first version. Alternatively, the target shared RO resource for the 4-step CBRA configuration in the first version and the 4-step CBRA configuration in the second version is determined to be null in response to determining that the second shared RO resource for the 4-step CBRA configuration in the first version and the 4-step CBRA configuration in the second version is not configured in the CBRA configuration in the first version.

In still further embodiments of the present invention, the method further includes determining the target preamble set according to the first configuration information, including: determining that, in the CBRA configuration in the first version, a number of preambles in a CBRA configuration having a shared RO resource with the CBRA configuration is configured, where the number of preambles in the CBRA configuration having the shared RO resource includes at least one of: a number of preambles of a 2-step CBRA configuration in a second version, a number of preambles of a 4-step CBRA configuration in the second version, a number of preambles of a 2-step CBRA configuration in the first version, or a number of preambles of a 4-step CBRA configuration in the first version; and determining the target preamble set in the target shared RO resource according to the number of preambles in the CBRA configuration.

In some embodiments, it is determined that the starting position of the target preamble set is located after the preamble set of the 4-step CBRA configuration in the second version in response to determining that the CBRA configuration in the first version has the common available RO set with the 4-step CBRA configuration in the second version.

In further embodiments, it is determined that the starting position of the target preamble set is located after the preamble set of the 2-step CBRA configuration in the second version in response to determining that the CBRA configuration in the first version has the common available RO set with the 2-step CBRA configuration in the second version.

In still further embodiments, it is determined that the starting position of the preamble set of the 2-step CBRA configuration is located after the preamble set of the 4-step CBRA configuration in the first version in response to determining that the 2-step CBRA configuration in the first version in the CBRA configuration of the first version has the common available RO set with the 4-step CBRA configuration in the first version.

In embodiments of the present invention, the second shared RO resource configured by the network device may be the mapping relationship between the shared RO resource configured by the network device and the feature, and thus the terminal may determine the second shared RO resource according to the mapping relationship between the shared RO resource and the feature.

In some embodiments, the second shared RO resource may further be determined according to the protocol provision, for example, the protocol stipulates the second shared RO resource corresponding to the SharedROmaskindex, the network device configures and indicates the SharedROmaskindex, and the terminal determines the second shared RO resource according to the SharedROmaskindex indicated by the network device.

In some embodiments, the SharedROmaskindex may already exist or may be newly defined.

In embodiments of the present invention, the terminal receives the first configuration information from the network device, where the first configuration information indicates the at least one CBRA configuration in the first version; and the target available RO set is determined according to the first configuration information; and/or the target shared RO resource is determined according to the first configuration information; and/or the target preamble set is determined according to the first configuration information, so that the terminal may determine the used resources to communicate with the network device.

In embodiments of the present invention, the terminal receives the first configuration information from the network device, where the first configuration information indicates the at least one CBRA configuration in the first version; the target available RO set is determined according to the first configuration information; and the target shared RO resource is determined according to the first configuration information; and the target preamble set is determined according to the first configuration information, so that the terminal may determine the used resources to communicate with the network device.

Regarding the relevant description of embodiments of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target available RO set is determined according to the first configuration information; where the second available RO set that is multiplexed is determined in response to determining that the target available RO set for the 4-step CBRA configuration in the first version is not configured in the CBRA configuration in the first version, and the target available RO set is determined according to the multiplexed second available RO set.

In embodiments of the present invention, the second available RO set is at least one of: the available RO set configured in the at least one CBRA configuration in the first version; the available RO set configured in the at least one CBRA configuration in the second version, where the second version is Release 15 and/or Release 16.

In some embodiments, the terminal receives the second configuration information from the network device and determines the target available RO set according to the second configuration information. The terminal determines the target available RO set according to the first shared RO resource and the multiplexed second available RO set in response to determining that the second configuration information indicates the first shared RO resource.

In some embodiments, the terminal receives the second configuration information from the network device and determines the target available RO set according to the second configuration information. The terminal determines the multiplexed second available RO set as the target available RO set in response to determining that the second configuration information does not indicate the first shared RO resource.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In some embodiments, the second configuration information and the first configuration information both correspond to the CBRA configuration in the first version.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target available RO set is determined according to the first configuration information; where an available RO set of the 4-step CBRA configuration in the second version is determined to be multiplexed in response to determining that the target available RO set of the 4-step CBRA configuration in the first version is not configured in the 4-step CBRA configuration in the first version, and the target available RO set of the 4-step CBRA configuration in the first version is determined according to a second available RO set in an available RO set configuration of the 4-step CBRA configuration in the second version.

In some embodiments, the terminal receives the second configuration information from the network device and determines the target available RO set according to the second configuration information. The terminal determines the target available RO set according to the first shared RO resource and the second available RO set of the 4-step CBRA configuration in the second version in response to determining that the second configuration information indicates the first shared RO resource for the 4-step CBRA configuration in the first version and the 4-step CBRA configuration in the second version.

In some embodiments, the terminal receives the second configuration information from the network device and determines the target available RO set according to the second configuration information. The terminal determines the second available RO set of the 4-step CBRA configuration in the second version as the target available RO set in response to determining that the second configuration information does not indicate the first shared RO resource for the 2-step CBRA configuration in the first version and the 4-step CBRA configuration in the second version.

In embodiments of the present invention, the first shared RO resource configured by the network device may be the mapping relationship between the shared RO resource configured by the network device and the 4-step CBRA configuration in the second version, and thus the terminal may determine the first shared RO resource according to the mapping relationship between the shared RO resource and the 4-step CBRA configuration in the second version.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the target shared RO resource(s) for the 4-step CBRA configuration in the first version and the 4-step CBRA configuration in the second version is determined to be all the RO resources in the target available RO set determined by the terminal according to the 4-step CBRA configuration in the second version.

In further embodiments of the present invention, the method further includes determining the target shared RO resource according to the first configuration information, where the terminal determines the target shared RO resource for the 4-step CBRA configuration in the first version and the 2-step CBRA configuration in the second version according to the second shared RO resource and the first shared RO resource in response to determining that the second shared RO resource for the 2-step CBRA configuration in the second version and the 4-step CBRA configuration in the second version and the first shared RO resource for the 4-step CBRA configuration in the first version and the 4-step CBRA configuration in the second version are configured in the CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the second version and the 4-step CBRA configuration in the second version is not configured in the CBRA configuration in the first version.

In still further embodiments of the present invention, the method further includes determining the target shared RO resource according to the first configuration information, where it is determined that a shared RO resource configuration of the 2-step CBRA configuration in the second version is multiplexed, and the second shared RO resource in the shared RO resource configuration of the 2-step CBRA configuration in the second version is determined as the target shared RO resource.

In embodiments of the present invention, the first shared RO resource or the second shared RO resource is determined according to the second configuration information configured by the network device or the protocol provision.

The first shared RO resource or the second shared RO resource that is determined according to the second configuration information configured by the network device may be the mapping relationship between the shared RO resource configured by the network device and the feature, and thus the terminal may determine the first shared RO resource or the second shared RO resource according to the mapping relationship between the shared RO resource and the feature.

In some embodiments, the first shared RO resource or the second shared RO resource may further be determined according to the protocol provision, for example, the protocol stipulates the first shared RO resource or the second shared RO resource corresponding to the SharedROmaskindex, the network device configures and indicates the SharedROmaskindex, and the terminal determines the first shared RO resource or the second shared RO resource according to the SharedROmaskindex indicated by the network device.

In some embodiments, the SharedROmaskindex may already exist or may be newly defined.

In still further embodiments of the present invention, the target preamble set is determined according to the first configuration information, including: determining that, in the CBRA configuration in the first version, a number of preambles in a CBRA configuration having a shared RO resource with the CBRA configuration is configured, where the number of preambles in the CBRA configuration having the shared RO resource includes at least one of: a number of preambles of a 2-step CBRA configuration in a second version, a number of preambles of a 4-step CBRA configuration in the second version, a number of preambles of a 2-step CBRA configuration in the first version, or a number of preambles of a 4-step CBRA configuration in the first version; and determining the target preamble set in the target shared RO resource according to the number of preambles in the CBRA configuration.

In some embodiments, it is determined that the starting position of the target preamble set is located after the preamble set of the 4-step CBRA configuration in the second version in response to determining that the CBRA configuration in the first version has the common available RO set with the 4-step CBRA configuration in the second version.

In further embodiments, it is determined that the starting position of the target preamble set is located after the preamble set of the 2-step CBRA configuration in the second version in response to determining that the CBRA configuration in the first version has the common available RO set with the 2-step CBRA configuration in the second version.

In still further embodiments, it is determined that the starting position of the preamble set of the 2-step CBRA configuration is located after the preamble set of the 4-step CBRA in the first version in response to determining that the 2-step CBRA configuration in the first version in the CBRA configuration in the first version has the common available RO set with the 4-step CBRA in the first version.

In embodiments of the present invention, the terminal receives the first configuration information from the network device, where the first configuration information indicates the at least one CBRA configuration in the first version; the target available RO set is determined according to the first configuration information; and the target shared RO resource is determined according to the first configuration information; and the target preamble set is determined according to the first configuration information, so that the terminal may determine the used resources to communicate with the network device.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where the first available RO set is determined as the target available RO set of the 2-step CBRA configuration in the first version in response to determining that the first available RO set of the 2-step CBRA configuration in the first version is configured in the CBRA configuration in the first version.

In some embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the first version is configured in the CBRA configuration in the first version.

In still further embodiments of the present invention, the method further includes determining the target shared RO resource according to the first configuration information, where the target shared RO resource shared with the 4-step CBRA configuration in the first version is determined to be null in response to determining that the second shared RO resource for the 2-step CBRA configuration in the first version and the 4-step CBRA configuration in the first version is not configured in the CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 2-step CBRA configuration in the second version is configured in the CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the first version and the 2-step CBRA configuration in the second version is not configured in the CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the second version is not configured in the CBRA configuration in the first version.

In still further embodiments of the present invention, the method further includes determining the target shared RO resource according to the first configuration information, where the target shared RO resource shared with the 4-step CBRA configuration in the second version is determined to be null in response to determining that the second shared RO resource for the 2-step CBRA configuration in the first version and the 4-step CBRA configuration in the second version is not configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where the second available RO set multiplexed is determined in response to determining that the first available RO set for the 2-step CBRA configuration in the first version is not configured in the CBRA configuration in the first version, and the target available RO set is determined according to the second available RO set.

In embodiments of the present invention, the second available RO set is at least one of: the available RO set configured in the at least one CBRA configuration in the first version; the available RO set configured in the at least one CBRA configuration in the second version, where the second version is Release 15 and/or Release 16.

In some embodiments, the terminal receives the second configuration information from the network device, where the second configuration information indicates the first shared RO resource, and the terminal determines the target available RO set according to the first shared RO resource and the second available RO set.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments, the terminal determines the multiplexed second available RO set as the target available RO set in a case where the terminal does not determine the first shared RO resource.

In some embodiments of the present invention, the method includes determining the target available RO set according to the first configuration information. The second available RO set in the 4-step CBRA configuration in the first version (which is multiplexed) is determined in response to determining that the first available RO set of the 2-step CBRA configuration in the first version is not configured in the CBRA configuration in the first version, and the target available RO set is determined according to the second available RO set.

In some embodiments, the terminal receives the second configuration information from the network device and determines the target available RO set according to the second configuration information. The terminal determines the target available RO set according to the first shared RO resource and the second available RO set of the 4-step CBRA configuration in the first version in response to determining that the second configuration information indicates the first shared RO resource for the 2-step CBRA configuration in the first version and the 4-step CBRA configuration in the first version.

In some embodiments, the terminal receives the second configuration information from the network device and determines the target available RO set according to the second configuration information. The terminal determines the second available RO set of the 4-step CBRA configuration in the first version as the target available RO set in response to determining that the second configuration information does not indicate the first shared RO resource for the 2-step CBRA configuration in the first version and the 4-step CBRA configuration in the first version.

In embodiments of the present invention, the first shared RO resource is determined according to the second configuration information or the protocol provision configured by the network device.

In embodiments of the present invention, the first shared RO resource determined according to the second configuration information configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the terminal determines all the RO resources in the target available RO set determined according to the 4-step CBRA configuration in the first version as the target available RO set in response to determining that the terminal determines to multiplex the second available RO set of the 4-step CBRA configuration in the first version.

In some embodiments of the present invention, the method further includes determining the target shared RO resource according to the first configuration information, where the second shared RO resource is determined as the target shared RO resource in response to determining that the second shared RO resource for the 2-step CBRA configuration in the first version and the 2-step CBRA configuration in the second version is configured in the CBRA configuration in the first version.

In further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the first version and the 2-step CBRA configuration in the second version is not configured in the CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the second version is configured in the CBRA configuration in the first version.

In still further embodiments of the present invention, the method further includes determining the target shared RO resource according to the first configuration information, where the target shared RO resource shared with the 4-step CBRA configuration in the second version is determined to be null in response to determining that the second shared RO resource for the 2-step CBRA configuration in the first version and the 4-step CBRA configuration in the second version is not configured in the CBRA configuration in the first version.

In embodiments of the present invention, the second shared RO resource is determined according to the second configuration information or the protocol provision configured by the network device.

The second shared RO resource determined according to the second configuration information configured by the network device may be the mapping relationship between the shared RO resource configured by the network device and the feature, and thus the terminal may determine the second shared RO resource according to the mapping relationship between the shared RO resource and the feature.

In some embodiments, the second shared RO resource may further be determined according to the protocol provision, for example, the protocol stipulates the second shared RO resource corresponding to the SharedROmaskindex, the network device configures and indicates the SharedROmaskindex, and the terminal determines the second shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where it is determined to multiplex the available RO set configuration of the 4-step CBRA configuration in the second version in response to determining that the target available RO set of the 2-step CBRA configuration in the first version is not configured in the 2-step CBRA configuration in the first version, the second available RO set of the available RO set configuration of the 4-step CBRA configuration in the second version is determined, and the target available RO set is determined according to the second available RO set.

In some embodiments, the terminal receives the second configuration information from the network device and determines the target available RO set according to the second configuration information. The terminal determines the target available RO set according to the first shared RO resource and the second available RO set of the 4-step CBRA configuration in the second version in response to determining that the second configuration information indicates the first shared RO resource for the 2-step CBRA configuration in the first version and the 4-step CBRA configuration in the second version.

In some embodiments, the terminal receives the second configuration information from the network device and determines the target available RO set according to the second configuration information. The terminal determines the second available RO set of the 4-step CBRA configuration in the second version as the target available RO set in response to determining that the second configuration information does not indicate the first shared RO resource for the 2-step CBRA configuration in the first version and the 4-step CBRA configuration in the second version.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the target shared RO resource for the 2-step CBRA configuration in the first version and the 4-step CBRA configuration in the second version is determined to be all the RO resources in the target available RO set determined by the terminal according to the 4-step CBRA configuration in the second version.

In further embodiments of the present invention, the method further includes determining the target shared RO resource according to the first configuration information, where the terminal determines the target shared RO resource for the 2-step CBRA configuration in the first version and the 2-step CBRA configuration in the second version according to the second shared RO resource and the first shared RO resource in response to determining that the second shared RO resource for the 2-step CBRA configuration in the second version and the 4-step CBRA configuration in the second version and the first shared RO resource for the 2-step CBRA configuration in the first version and the 4-step CBRA configuration in the second version are configured in the 2-step CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the first shared RO resource for the 2-step CBRA configuration in the first version and the 4-step CBRA configuration in the second version is configured in the 2-step CBRA configuration in the first version and the second shared RO resource for the 2-step CBRA configuration in the second version and the 4-step CBRA configuration in the second version is not configured in the 2-step CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the first version is configured in the CBRA configuration in the first version.

In still further embodiments of the present invention, the method further includes determining the target shared RO resource according to the first configuration information, where the target shared RO resource shared with the 4-step CBRA configuration in the first version is determined to be null in response to determining that the second shared RO resource for the 2-step CBRA configuration in the first version and the 4-step CBRA configuration in the first version is not configured in the CBRA configuration in the first version.

In embodiments of the present invention, the first shared RO resource or the second shared RO resource is determined according to the second configuration information or the protocol provision configured by the network device.

The first shared RO resource or the second shared RO resource is determined according to the second configuration information configured by the network device may be the mapping relationship between the shared RO resource configured by the network device and the feature, and thus the terminal may determine the first shared RO resource or the second shared RO resource according to the mapping relationship between the shared RO resource and the feature.

In some embodiments, the first shared RO resource or the second shared RO resource may further be determined according to the protocol provision, for example, the protocol stipulates the first shared RO resource or the second shared RO resource corresponding to the SharedROmaskindex, the network device configures and indicates the SharedROmaskindex, and the terminal determines the first shared RO resource or the second shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where it is determined to multiplex the available RO set configuration of the 2-step CBRA configuration in the second version in response to determining that the target available RO set of the 2-step CBRA configuration in the first version is not configured in the CBRA configuration in the first version, the second available RO set of the available RO set configuration of the 2-step CBRA configuration in the second version is determined, and the target available RO set of the 2-step CBRA configuration in the first version is determined according to the second available RO set.

In some embodiments, the terminal receives the second configuration information from the network device and determines the target available RO set according to the second configuration information. The terminal determines the target available RO set according to the first shared RO resource and the second available RO set of the 2-step CBRA configuration in the second version in response to determining that the second configuration information indicates the second available RO set of the 2-step CBRA configuration in the second version and the first shared RO resource for the 2-step CBRA configuration in the first version and the 2-step CBRA configuration in the second version.

In some embodiments, the terminal receives the second configuration information from the network device and determines the target available RO set according to the second configuration information. The terminal determines the second available RO set of the 4-step CBRA configuration in the second version as the target available RO set in response to determining that the second configuration information indicates the second available RO set of the 2-step CBRA configuration in the second version but does not indicate the first shared RO resource for the 2-step CBRA configuration in the first version and the 4-step CBRA configuration in the second version.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the terminal determines all the RO resources in the target available RO set determined according to the 2-step CBRA configuration in the first version as the target available RO set in response to determining that the terminal determines to multiplex the second available RO set of the 2-step CBRA configuration in the second version.

In further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the second version is configured in the CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the first version and the 4-step CBRA configuration in the second version is not configured in the CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the first version is configured in the CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the first version and the 4-step CBRA configuration in the first version is not configured in the CBRA configuration in the first version.

In embodiments of the present invention, the second shared RO resource is determined according to the second configuration information or the protocol provision configured by the network device.

The second shared RO resource determined according to the second configuration information configured by the network device may be the mapping relationship between the shared RO resource configured by the network device and the feature, and thus the terminal may determine the second shared RO resource according to the mapping relationship between the shared RO resource and the feature.

In some embodiments, the second shared RO resource may further be determined according to the protocol provision, for example, the protocol stipulates the second shared RO resource corresponding to the SharedROmaskindex, the network device configures and indicates the SharedROmaskindex, and the terminal determines the second shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where it is determined to multiplex the available RO set configuration of the 2-step CBRA configuration in the second version in response to determining that the target available RO set of the 2-step CBRA configuration in the first version is not configured in the CBRA configuration in the first version and in response to determining that the shared RO resource shared with the 2-step CBRA configuration in the second version is configured in the CBRA configuration in the first version, and the second available RO set of the multiplexed available RO set configuration of the 2-step CBRA configuration in the second version is determined, and the target available RO set is determined according to the second available RO set of the 2-step CBRA configuration in the second version.

In some embodiments, the terminal receives the second configuration information from the network device and determines the target available RO set according to the second configuration information. The terminal determines the target available RO set according to the first shared RO resource and the second available RO set of the 2-step CBRA configuration in the second version in response to determining that the second configuration information indicates the second available RO set of the 2-step CBRA configuration in the second version and the first shared RO resource for the 2-step CBRA configuration in the first version and the 2-step CBRA configuration in the second version.

In some embodiments, the terminal receives the second configuration information from the network device and determines the target available RO set according to the second configuration information. The terminal determines the second available RO set of the 4-step CBRA configuration in the second version as the target available RO set in response to determining that the second configuration information indicates the second available RO set of the 2-step CBRA configuration in the second version but does not indicate the first shared RO resource for the 2-step CBRA configuration in the first version and the 4-step CBRA configuration in the second version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the terminal determines all the RO resources in the target available RO set determined according to the 2-step CBRA configuration in the first version as the target shared RO resource in response to determining that the terminal determines to multiplex the second available RO set of the 2-step CBRA configuration in the second version.

In further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the second version is configured in the 2-step CBRA configuration in the first version.

In still further embodiments of the present invention, the method further includes determining the target shared RO resource according to the first configuration information, where the target shared RO resource of the 2-step CBRA configuration in the second version is determined to be null in response to determining that the second shared RO resource for the 2-step CBRA configuration in the first version and the 4-step CBRA configuration in the second version is not configured in the 2-step CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the first version is configured in the CBRA configuration in the first version.

In still further embodiments of the present invention, the method further includes determining the target shared RO resource according to the first configuration information, where the target shared RO resource of the 2-step CBRA configuration in the second version is determined to be null in response to determining that the second shared RO resource for the 2-step CBRA configuration in the first version and the 4-step CBRA configuration in the first version is not configured in the 2-step CBRA configuration in the first version.

In embodiments of the present invention, the second shared RO resource is determined according to the second configuration information or the protocol provision configured by the network device.

The second shared RO resource determined according to the second configuration information configured by the network device may be the mapping relationship between the shared RO resource configured by the network device and the feature, and thus the terminal may determine the second shared RO resource according to the mapping relationship between the shared RO resource and the feature.

In some embodiments, the second shared RO resource may further be determined according to the protocol provision, for example, the protocol stipulates the second shared RO resource corresponding to the SharedROmaskindex, the network device configures and indicates the SharedROmaskindex, and the terminal determines the second shared RO resource according to the SharedROmaskindex indicated by the network device.

In some embodiments, the SharedROmaskindex may already exist or may be newly defined.

It should be noted that, in embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where it is determined to multiplex the available RO set configuration of the 4-step CBRA configuration in the second version in response to determining that the target available RO set of the 2-step CBRA configuration in the first version is not configured in the CBRA configuration in the first version and the shared RO resource shared with the 2-step CBRA configuration in the second version is not configured in the CBRA configuration in the first version, the second available RO set in the available RO set configuration of the 4-step CBRA configuration in the second version is determined, and the target available RO set is determined according to the second available RO set of the 4-step CBRA configuration in the second version.

In some embodiments, the terminal receives the second configuration information from the network device and determines the target available RO set according to the second configuration information. The terminal determines the target available RO set according to the first shared RO resource and the second available RO set of the 4-step CBRA configuration in the second version in response to determining that the second configuration information indicates the first shared RO resource for the 2-step CBRA configuration in the first version and the 4-step CBRA configuration in the second version.

In some embodiments, the terminal receives the second configuration information from the network device and determines the target available RO set according to the second configuration information. The terminal determines the second available RO set of the 4-step CBRA configuration in the second version as the target available RO set in response to determining that the second configuration information does not indicate the first shared RO resource for the 2-step CBRA configuration in the first version and the 4-step CBRA configuration in the second version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the target shared RO resource for the 2-step CBRA configuration in the first version and the 4-step CBRA configuration in the second version is determined to be all the RO resources in the target available RO resource determined by the terminal according to the 4-step CBRA configuration in the second version.

In further embodiments of the present invention, the method further includes determining the target shared RO resource according to the first configuration information, where the terminal determines the target shared RO resource for the 2-step CBRA configuration in the first version and the 2-step CBRA configuration in the second version according to the second shared RO resource and the first shared RO resource in response to determining that the second shared RO resource for the 2-step CBRA configuration in the second version and the 4-step CBRA configuration in the second version and the first shared RO resource for the 2-step CBRA configuration in the first version and the 4-step CBRA configuration in the second version are configured in the 2-step CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the first shared RO resource for the 2-step CBRA configuration in the first version and the 4-step CBRA configuration in the second version is configured in the 2-step CBRA configuration in the first version, but the second shared RO resource for the 2-step CBRA configuration in the second version and the 4-step CBRA configuration in the second version is not configured in the 2-step CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the first version is configured in the CBRA configuration in the first version.

In still further embodiments of the present invention, the method further includes determining the target shared RO resource according to the first configuration information, where the target shared RO resource shared with the 4-step CBRA configuration in the first version is determined to be null in response to determining that the second shared RO resource for the 2-step CBRA configuration in the first version and the 4-step CBRA configuration in the first version is not configured in the CBRA configuration in the first version.

In embodiments of the present invention, the first shared RO resource or the second shared RO resource is determined according to the second configuration information or the protocol provision configured by the network device.

The first shared RO resource or the second shared RO resource is determined according to the second configuration information configured by the network device may be the mapping relationship between the shared RO resource configured by the network device and the feature, and thus the terminal may determine the first shared RO resource or the second shared RO resource according to the mapping relationship between the shared RO resource and the feature.

In some embodiments, the first shared RO resource or the second shared RO resource may further be determined according to the protocol provision, for example, the protocol stipulates the first shared RO resource or the second shared RO resource corresponding to the SharedROmaskindex, the network device configures and indicates the SharedROmaskindex, and the terminal determines the first shared RO resource or the second shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where it is determined to multiplex the available RO set configuration of the 4-step CBRA configuration in the first version in response to determining that the target available RO set of the 2-step CBRA configuration in the first version is not configured in the CBRA configuration in the first version, and in response to determining that the shared RO resource shared with the 4-step CBRA configuration in the first version is configured in the CBRA configuration in the first version, the second available RO set in the multiplexed available RO set configuration of the 4-step CBRA configuration in the first version is determined, and the target available RO set is determined according to the second available RO set of the 4-step CBRA configuration in the first version.

In some embodiments, the terminal receives the second configuration information from the network device and determines the target available RO set according to the second configuration information. The terminal determines the target available RO set according to the first shared RO resource and the second available RO set of the 4-step CBRA configuration in the first version in response to determining that the second configuration information indicates the first shared RO resource for the 2-step CBRA configuration in the first version and the 4-step CBRA configuration in the first version.

In some embodiments, the terminal receives the second configuration information from the network device and determines the target available RO set according to the second configuration information. The terminal determines the second available RO set of the 4-step CBRA configuration in the first version as the target available RO set in response to determining that the second configuration information does not indicate the first shared RO resource for the 2-step CBRA configuration in the first version and the 4-step CBRA configuration in the first version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the terminal determines all the RO resources in the target available RO set determined according to the 4-step CBRA configuration in the first version as the target shared RO resource in response to determining that the terminal determines to multiplex the second available RO set of the 4-step CBRA configuration in the first version.

In further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the second version is configured in the 2-step CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the first version and the 4-step CBRA configuration in the second version is not configured in the 2-step CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 2-step CBRA configuration in the second version is configured in the CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the second shared RO resource for the 2-step CBRA configuration in the first version and the 2-step CBRA configuration in the second version is not configured in the 2-step CBRA configuration in the first version.

In embodiments of the present invention, the second shared RO resource is determined according to the second configuration information or the protocol provision configured by the network device.

The second shared RO resource determined according to the second configuration information configured by the network device may be the mapping relationship between the shared RO resource configured by the network device and the feature, and thus the terminal may determine the second shared RO resource according to the mapping relationship between the shared RO resource and the feature.

In some embodiments, the second shared RO resource may further be determined according to the protocol provision, for example, the protocol stipulates the second shared RO resource corresponding to the SharedROmaskindex, the network device configures and indicates the SharedROmaskindex, and the terminal determines the second shared RO resource according to the SharedROmaskindex indicated by the network device.

In some embodiments, the SharedROmaskindex may already exist or may be newly defined.

It should be noted that, in embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where it is determined to multiplex the available RO set configuration of the 4-step CBRA configuration in the second version in response to determining that the target available RO set of the 2-step CBRA configuration in the first version and the shared RO resource shared with the 4-step CBRA configuration in the first version are not configured in the CBRA configuration in the first version, the second available RO set in the multiplexed available RO set configuration of the 4-step CBRA configuration in the second version is determined, and the target available RO set is determined according to the second available RO set of the 4-step CBRA configuration in the second version.

In some embodiments, the terminal receives the second configuration information from the network device and determines the target available RO set according to the second configuration information. The terminal determines the target available RO set according to the first shared RO resource and the second available RO set of the 4-step CBRA configuration in the second version in response to determining that the second configuration information indicates the first shared RO resource for the 2-step CBRA configuration in the first version and the 4-step CBRA configuration in the second version.

In some embodiments, the terminal receives the second configuration information from the network device and determines the target available RO set according to the second configuration information. The terminal determines the second available RO set of the 4-step CBRA configuration in the second version as the target available RO set in response to determining that the second configuration information does not indicate the first shared RO resource for the 2-step CBRA configuration in the first version and the 4-step CBRA configuration in the second version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments of the present invention, the method further includes determining the target shared RO resource according to the first configuration information, where the target shared RO resource for the 2-step CBRA configuration in the first version and the 4-step CBRA configuration in the second version is determined to be all the RO resources in the target available RO set determined by the terminal according to the 4-step CBRA configuration in the second version.

In further embodiments of the present invention, the method further includes determining the target shared RO resource according to the first configuration information, where the terminal determines the target shared RO resource for the 2-step CBRA configuration in the first version and the 2-step CBRA configuration in the second version according to the second shared RO resource and the first shared RO resource in response to determining that the second shared RO resource for the 2-step CBRA configuration in the second version and the 4-step CBRA configuration in the second version, and the first shared RO resource for the 2-step CBRA configuration in the first version and the 4-step CBRA configuration in the second version are configured in the 2-step CBRA configuration in the first version.

In still further embodiments of the present invention, the method further includes determining the target shared RO resource according to the first configuration information, where the target shared RO resource shared with the 2-step CBRA configuration in the second version is determined to be null in response to determining that the first shared RO resource for the 2-step CBRA configuration in the first version and the 4-step CBRA configuration in the second version is configured in the 2-step CBRA configuration in the first version, but the second shared RO resource for the 2-step CBRA configuration in the second version and the 4-step CBRA configuration in the second version is not configured in the 2-step CBRA configuration in the first version.

In still further embodiments of the present invention, the method further includes determining the target shared RO resource according to the first configuration information, where the second shared RO resource is determined as the target shared RO resource in response to determining that the second shared RO resource for the 2-step CBRA configuration in the first version and the 4-step CBRA configuration in the first version is configured in the CBRA configuration in the first version.

In still further embodiments of the present invention, the method further includes determining the target shared RO resource according to the first configuration information, where the target shared RO resource shared with the 4-step CBRA configuration in the first version is determined to be null in response to determining that the second shared RO resource for the 2-step CBRA configuration in the first version and the 4-step CBRA configuration in the first version is not configured in the CBRA configuration in the first version.

In embodiments of the present invention, the first shared RO resource or the second shared RO resource is determined according to the second configuration information or the protocol provision configured by the network device.

The first shared RO resource or the second shared RO resource is determined according to the second configuration information configured by the network device may be the mapping relationship between the shared RO resource configured by the network device and the feature, and thus the terminal may determine the first shared RO resource or the second shared RO resource according to the mapping relationship between the shared RO resource and the feature.

In some embodiments, the first shared RO resource or the second shared RO resource may further be determined according to the protocol provision, for example, the protocol stipulates the first shared RO resource or the second shared RO resource corresponding to the SharedROmaskindex, the network device configures and indicates the SharedROmaskindex, and the terminal determines the first shared RO resource or the second shared RO resource according to the SharedROmaskindex indicated by the network device.

In some embodiments, the SharedROmaskindex may already exist or may be newly defined.

Regarding the relevant description of embodiments of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the second shared RO resource is determined as the target shared RO resource in response to determining that the second shared RO resource for the 4-step CBRA configuration in the first version and the 2-step CBRA configuration in the second version is configured in the CBRA configuration in the first version.

Regarding the relevant description of embodiment of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the target shared RO resource is determined to be null in response to determining that the second shared RO resource for the 4-step CBRA configuration in the first version and the 2-step CBRA configuration in the second version is not configured in the CBRA configuration in the first version.

Regarding the relevant description of embodiment of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the second shared RO resource is determined as the target shared RO resource in response to determining that the second shared RO resource for the 4-step CBRA configuration in the first version and the 4-step CBRA configuration in the second version is configured in the CBRA configuration in the first version.

Regarding the relevant description of embodiment of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the target shared RO resource is determined to be null in response to determining that the second shared RO resource for the 4-step CBRA configuration in the first version and the 4-step CBRA configuration in the second version is not configured in the CBRA configuration in the first version.

Regarding the relevant description of embodiment of the present invention, reference may be made to the relevant description of other embodiments, which are not repeated herein.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the available RO set configuration of the 4-step CBRA configuration in the second version is determined to be multiplexed in response to determining that the target available RO set of the 4-step CBRA configuration in the first version is not configured in the CBRA configuration in the first version, the second available RO set in the available RO set configuration of the 4-step CBRA configuration in the second version is determined, and the target shared RO resource is determined to be all the RO resources in the second available RO set.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the available RO set configuration of the 4-step CBRA configuration in the second version is determined to be multiplexed in response to determining that the target available RO set of the 4-step CBRA configuration in the first version is not configured in the CBRA configuration in the first version, the second available RO set in the available RO set configuration of the 4-step CBRA configuration in the second version is determined, the first shared RO resource is determined, and the target shared RO resource is determined according to the first shared RO resource and the second available RO set.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In some embodiments, the terminal determines the second available RO set multiplexed as the target available RO set in a case where the terminal does not determine the first shared RO resource.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where in response to determining that the second shared RO resources of the 2-step CBRA configuration in the second version and the 4-step CBRA configuration in the second version is configured in the CBRA configuration in the first version and the first shared RO resource is determined, the target shared RO resource is determined according to the second shared RO resource and the first shared RO resource.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the target shared RO resource shared with the 2-step CBRA configuration in the second version is determined to be null in response to determining that the second shared RO resource for the 2-step CBRA configuration in the second version and the 4-step CBRA configuration in the second version is not configured in the CBRA configuration in the first version.

In one embodiment, the terminal receives the first configuration information from the network device, where the first configuration information indicates the at least one CBRA configuration in the first version; where the CBRA configuration in the first version includes the 4-step CBRA configuration in the first version, and the first version is Release 17; the target shared RO resource is determined according to the first configuration information; where the shared RO resource configuration of the 2-step CBRA configuration in the second version is determined to be multiplexed, and the second shared RO resource in the shared RO resource configuration of the 2-step CBRA configuration in the second version is determined as the target shared RO resource.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource for the 2-step CBRA configuration in the first version and the 4-step CBRA configuration in the first version is determined to be null in response to determining that the target available RO set of the 2-step CBRA configuration in the first version is configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the second shared RO resource is determined as the target shared RO resource in response to determining that the second shared RO resource for the 2-step CBRA configuration in the first version and the 2-step CBRA configuration in the second version is configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource shared with the 2-step CBRA configuration in the second version is determined to be null in response to determining that the second shared RO resource for the 2-step CBRA configuration in the first version and the 2-step CBRA configuration in the second version is not configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the second shared RO resource is determined as the target shared RO resource in response to determining that the second shared RO resource for the 2-step CBRA configuration in the first version and the 4-step CBRA configuration in the second version is configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource shared with the 4-step CBRA configuration in the second version is determined to be null in response to determining that the second shared RO resource for the 2-step CBRA configuration in the first version and the 4-step CBRA configuration in the second version is not configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 4-step CBRA configuration in the first version is configured in the CBRA configuration in the first version, determines the second available RO set in the multiplexed available RO set configuration of the 4-step CBRA configuration in the first version, and determines that the target shared RO resource shared with the 4-step CBRA configuration in the first version is all the RO resources in the second available RO set.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 4-step CBRA configuration in the first version is configured in the CBRA configuration in the first version, determines the second available RO set in the multiplexed available RO set configuration of the 4-step CBRA configuration in the first version, determines the first shared RO resource, and determines the target shared RO resource shared with the 4-step CBRA configuration in the first version as the first shared RO resource according to the first shared RO resource and the second available RO set.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 4-step CBRA configuration in the second version is configured in the CBRA configuration in the first version, determines the second available RO set in the multiplexed available RO set configuration of the 4-step CBRA configuration in the second version, and determines the target shared RO resource shared with the 4-step CBRA configuration in the first version to be null.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 4-step CBRA configuration in the second version is configured in the CBRA configuration in the first version, determines the second available RO set in the multiplexed available RO set configuration of the 4-step CBRA configuration in the second version, and determines the target shared RO resource shared with the 4-step CBRA configuration in the second version to be all the RO resources in the second available RO set.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 4-step CBRA configuration in the second version is configured in the CBRA configuration in the first version, determines the second available RO set in the multiplexed available RO set configuration of the 4-step CBRA configuration in the second version, determines the first shared RO resource, and determines the target shared RO resource shared with the 4-step CBRA configuration in the second version as the first shared RO resource according to the first shared RO resource and the second available RO set.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where in response to determining that the second shared RO resource for the 2-step CBRA configuration in the second version and the 4-step CBRA configuration in the second version is configured in the CBRA configuration in the first version and the first shared RO resource is determined, the target shared RO resource is determined according to the second shared RO resource and the first shared RO resource.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource shared with the 2-step CBRA configuration in the second version is determined to be null in response to determining that the second shared RO resource for the 2-step CBRA configuration in the second version and the 4-step CBRA configuration in the second version is not configured in the CBRA configuration in the first version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the shared RO resource configuration of the 2-step CBRA configuration in the second version is determined to be multiplexed, and the second shared RO resource in the shared RO resource configuration of the 2-step CBRA configuration in the second version is determined as the target shared RO resource.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 2-step CBRA configuration in the second version is configured in the CBRA configuration in the first version, determines the second available RO set in the multiplexed available RO set configuration of the 2-step CBRA configuration in the second version, and determines the target shared RO resource for the 2-step CBRA configuration in the first version and the 4-step CBRA configuration in the first version to be null.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 2-step CBRA configuration in the second version is configured in the CBRA configuration in the first version, determines the second available RO set in the multiplexed available RO set configuration of the 2-step CBRA configuration in the second version, and determines the target shared RO resource of the 2-step CBRA configuration in the second version as all the RO resources in the second available RO set; where the second available RO set of the 2-step CBRA configuration in the second version does not share the available RO set with the 2-step CBRA configuration in the second version.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the terminal determines that the multiplexed available RO set configuration of the 2-step CBRA configuration in the second version is configured in the CBRA configuration in the first version, determines the second available RO set in the multiplexed available RO set configuration of the 2-step CBRA configuration in the second version, determines the first shared RO resource, and determines the target shared RO resource shared with the 4-step CBRA configuration in the second version as the first shared RO resource according to the first shared RO resource and the second available RO set.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource for the 2-step CBRA configuration in the first version and the 4-step CBRA configuration in the first version is determined to be null in response to determining that the first shared RO resource shared with the 2-step CBRA configuration in the second version is configured in the CBRA configuration in the first version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

It should be noted that, in embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource for the 2-step CBRA configuration in the first version and the 2-step CBRA configuration in the second version is determined as the first shared RO resource in response to determining that the first shared RO resource for the 2-step CBRA configuration in the first version and the 2-step CBRA configuration in the second version is configured in the CBRA configuration in the first version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

It should be noted that, in embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource for the 2-step CBRA configuration in the first version and the 2-step CBRA configuration in the second version is determined to be null in response to determining that the first shared RO resource for the 2-step CBRA configuration in the first version and the 2-step CBRA configuration in the second version is not configured in the CBRA configuration in the first version.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

It should be noted that, in embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where in responding to determining that the first shared RO resource for the 2-step CBRA configuration in the first version and the 2-step CBRA configuration in the second version is not configured, the terminal determines that the multiplexed available RO set configuration of the 4-step CBRA configuration in the second version is configured in the CBRA configuration in the first version, determines the second available RO set in the multiplexed available RO set configuration of the 4-step CBRA configuration in the second version, and determines the target shared RO resource shared with the 4-step CBRA configuration in the first version to be null.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where in responding to determining that the shared RO resource for the 2-step CBRA configuration in the first version and the 2-step CBRA configuration in the second version is not configured, the terminal determines that the available RO set configuration for multiplexing the 4-step CBRA configuration in the second version is configured in the CBRA configuration in the first version, determines the second available RO set in the available RO set configuration for multiplexing the 4-step CBRA configuration in the second version, and determines the target shared RO resource of the 4-step CBRA configuration in the second version as all the RO resources in the second available RO set.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where in responding to determining that the shared RO resource for the 2-step CBRA configuration in the first version and the 2-step CBRA configuration in the second version is not configured in the CBRA configuration in the first version, the terminal determines that the multiplexed available RO set configuration of the 4-step CBRA configuration in the second version is configured in the CBRA configuration in the first version, determines the second available RO set in the multiplexed available RO set configuration of the 4-step CBRA configuration in the second version, determines the first shared RO resource, and determines the target shared RO resource shared with the 4-step CBRA configuration in the second version as the first shared RO resource according to the first shared RO resource and the second available RO set.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target shared RO resource is determined according to the first configuration information; where the target shared RO resource shared with the 4-step CBRA configuration in the first version is determined as the first shared RO resource in response to determining that the first shared RO resource shared with the 4-step CBRA configuration in the first version is configured.

In embodiments of the present invention, the first shared RO resource is determined according to the second configuration information or the protocol provision configured by the network device.

In embodiments of the present invention, the first shared RO resource configured by the network device may be the mapping relationship between the shared RO resource configured by the network device and the feature, and thus the terminal may determine the first shared RO resource according to the mapping relationship between the shared RO resource and the feature.

In some embodiments, the first shared RO resource may further be determined according to the protocol provision, for example, the protocol stipulates the first shared RO resource corresponding to the SharedROmaskindex, the network device configures and indicates the SharedROmaskindex, and the terminal determines the first shared RO resource according to the SharedROmaskindex indicated by the network device.

In some embodiments, the SharedROmaskindex may already exist or may be newly defined.

It should be noted that, in embodiments of the present invention, the network device sends the second configuration information via the broadcast system information, where the broadcast system information may be the SIB x, where x is the positive integer, and the SIB x may be the existing system information or the newly defined system information. For example, in one embodiment of the present invention, the SIB x may be the existing SIB 1.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target available RO set is determined according to the first configuration information; where in response to determining that the target available RO set of the 2-step CBRA configuration in the first version is not configured in the CBRA configuration in the first version, the second available RO set in the multiplexed available RO set configuration of the 4-step CBRA configuration in the second version is determined in a case where the shared RO resource shared with the 4-step CBRA configuration in the first version is not configured, and the target shared RO resource for the 2-step CBRA configuration in the first version and the 4-step CBRA configuration in the second version is determined to be all the RO resources in the second available RO set.

In one embodiment, the terminal receives the first configuration information from the network device, where the first configuration information indicates the at least one CBRA configuration in the first version; where the CBRA configuration in the first version includes the 2-step CBRA configuration in the first version, and the first version is Release 17; the target preamble set is determined according to the first configuration information, including: determining that, in the CBRA configuration in the first version, a number of preambles in a CBRA configuration having a shared RO resource with the CBRA configuration is configured, where the number of preambles in the CBRA configuration having the shared RO resource includes at least one of: a number of preambles of a 2-step CBRA configuration in a second version, a number of preambles of a 4-step CBRA configuration in the second version, a number of preambles of a 2-step CBRA configuration in the first version, or a number of preambles of a 4-step CBRA configuration in the first version; and determining the target preamble set in the target shared RO resource according to the number of preambles in the CBRA configuration.

In some embodiments, it is determined that the starting position of the target preamble set is located after the preamble set of the 4-step CBRA configuration in the second version in response to determining that the CBRA configuration in the first version has the common available RO set with the 4-step CBRA configuration in the second version.

In further embodiments, it is determined that the starting position of the target preamble set is located after the preamble set of the 2-step CBRA configuration in the second version in response to determining that the CBRA configuration in the first version has the common available RO set with the 2-step CBRA configuration in the second version.

In still further embodiments, it is determined that the starting position of the preamble set of the 2-step CBRA configuration is located after the preamble set of the 4-step CBRA configuration in the first version in response to determining that the 2-step CBRA configuration in the first version has the common available RO set with the 4-step CBRA configuration in the first version in the CBRA configuration of the first version.

Referring to FIG. 8, FIG. 8 is a flowchart illustrating another method for determining a resource according to embodiments of the present invention.

As shown in FIG. 8, the method, performed by the network device, may include, but is not limited to, the following step.

In S81, the first configuration information is sent, where the first configuration information indicates the at least one CBRA configuration in the first version.

In some embodiments, the CBRA configuration in the first version includes: the 4-step CBRA configuration in the first version and/or the 2-step CBRA configuration in the first version, where the first version is Release 17.

In some embodiments, the CBRA configuration in the first version is the common CBRA configuration of the multiple different features or the combinations of features in the first version or the specific CBRA configuration of the multiple different features or the combinations of features in the first version, and where the common CBRA configuration at least includes the configuration of the target shared RO resource and/or the configuration of the target available RO set.

In embodiments of the present invention, the network device sends the first configuration information via the broadcast system information, where the broadcast system information may be the SIB x, where x is a positive integer, and the SIB x may be the existing system information or the newly defined system information. For example, in one embodiment of the present invention, the SIB x may be the existing SIB 1.

It should be noted that, regarding the relevant description of the network device in S81 in embodiments of the present invention, reference may be made to the relevant description of the foregoing embodiments, and details are not described here again.

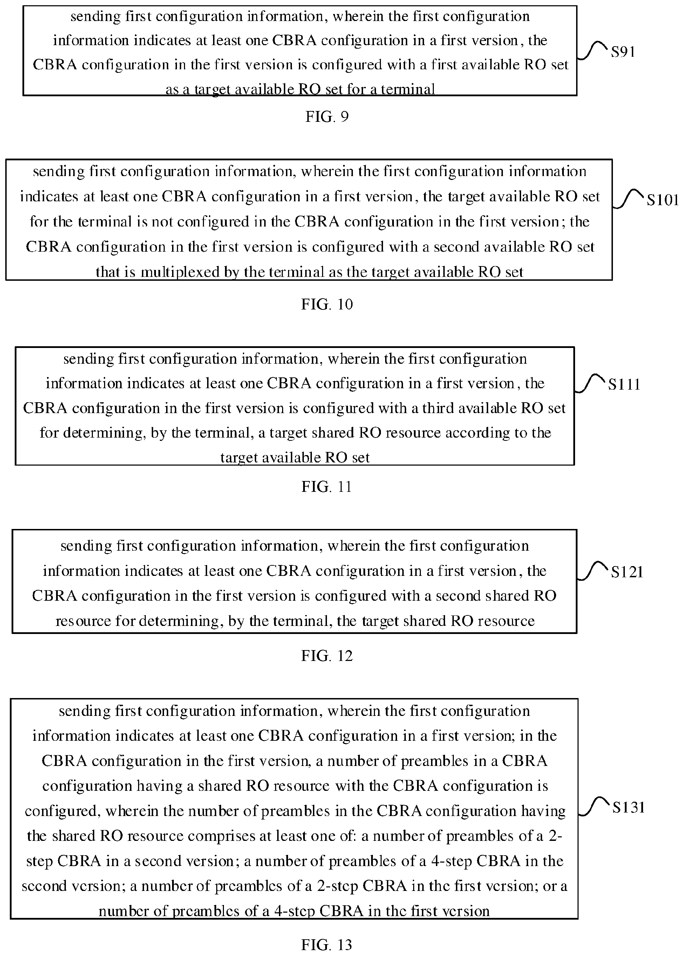

Referring to FIG. 9, FIG. 9 is a flowchart illustrating another method for determining a resource according to embodiments of the present invention.

As shown in FIG. 9, the method, performed by the network device, may include, but is not limited to, the following step.

In S91, the first configuration information is sent, where the first configuration information indicates the at least one CBRA configuration in the first version; and the CBRA configuration in the first version is configured with the first available RO set as the target available RO set for the terminal.

It should be noted that S91 may be implemented separately, or may be implemented together with any other step in accordance with embodiments of the present invention, for example, implemented together with S81 in accordance with embodiments of the present invention, and embodiments of the present invention are not limited thereto.

Referring to FIG. 10, FIG. 10 is a flowchart illustrating another method for determining a resource according to embodiments of the present invention.

As shown in FIG. 10, the method, performed by the network device, may include, but is not limited to, following steps.

In S101, the first configuration information is sent, where the first configuration information indicates the at least one CBRA configuration in the first version; the CBRA configuration in the first version is not configured with a target available RO set for the terminal; and the CBRA configuration in the first version is configured with a second available RO set that is multiplexed by the terminal as the target available RO set.

In some embodiments, the second available RO set is at least one of: an available RO set configured in the at least one CBRA configuration in the first version; an available RO set configured in at least one CBRA configuration in a second version, wherein the second version is Release 15 and/or Release 16.

In some embodiments, the second configuration information is sent, where the second configuration information indicates a first shared RO resource for determining, by the terminal, the target available RO set according to the second available RO set.

It should be noted that S101 may be implemented separately, or may be implemented together with any other step in accordance with embodiments of the present invention, for example, implemented together with S81 and/or S91 in accordance with embodiments of the present invention, and embodiments of the present invention are not limited thereto.

Referring to FIG. 11, FIG. 11 is a flowchart illustrating another method for determining a resource according to embodiments of the present invention.

As shown in FIG. 11, the method, performed by the network device, may include, but is not limited to, the following step.

In S111, the first configuration information is sent, where the first configuration information indicates the at least one CBRA configuration in the first version; and the CBRA configuration in the first version is configured with a third available RO set for determining, by the terminal, a target shared RO resource according to the target available RO set.

It should be noted that S111 may be implemented separately, or may be implemented together with any other step in accordance with embodiments of the present invention, for example, implemented together with S81 and/or S91 and/or S101 in accordance with embodiments of the present invention, and embodiments of the present invention are not limited thereto.

Referring to FIG. 12, FIG. 12 is a flowchart illustrating another method for determining a resource according to embodiments of the present invention.

As shown in FIG. 12, the method, performed by the network device, may include, but is not limited to, the following step.

In S121, the first configuration information is sent, where the first configuration information indicates the at least one CBRA configuration in the first version; and the CBRA configuration in the first version is configured with a second shared RO resource for determining, by the terminal, the target shared RO resource.

It should be noted that S 121 may be implemented separately, or may be implemented together with any other step in accordance with embodiments of the present invention, for example, implemented together with S81 and/or S91 and/or S101 and/or S111 in accordance with embodiments of the present invention, and embodiments of the present invention are not limited thereto.

Referring to FIG. 13, FIG. 13 is a flowchart illustrating another method for determining a resource according to embodiments of the present invention.

As shown in FIG. 13, the method, performed by the network device, may include, but is not limited to, the following step.

In S131, the first configuration information is sent, where the first configuration information indicates the at least one CBRA configuration in the first version; and in the CBRA configuration in the first version, a number of preambles in a CBRA configuration having a shared RO resource with the CBRA configuration is configured, where the number of preambles in the CBRA configuration having the shared RO resource includes at least one of: a number of preambles of a 2-step CBRA configuration in a second version, a number of preambles of a 4-step CBRA configuration in the second version, a number of preambles of a 2-step CBRA configuration in the first version, or a number of preambles of a 4-step CBRA configuration in the first version.

It should be noted that S131 may be implemented separately, or may be implemented together with any other step in accordance with embodiments of the present invention, for example, implemented together with S81 and/or S91 and/or S101 and/or S111 and/or S121 in accordance with embodiments of the present invention, and embodiments of the present invention are not limited thereto.

In the above-mentioned embodiments provided by the present invention, the methods according to embodiments of the present invention are described from the perspectives of the network device and the terminal, respectively. In order to realize various functions in the methods according to the above-mentioned embodiments of the present invention, the network device and the terminal may include a hardware structure and a software module, and the above-mentioned various functions are realized in the form of the hardware structure, the software module, or a combination of the hardware structure and the software module. Some of the functions described above may be performed by the hardware structure, the software module, or the combination of the hardware structure and the software module.

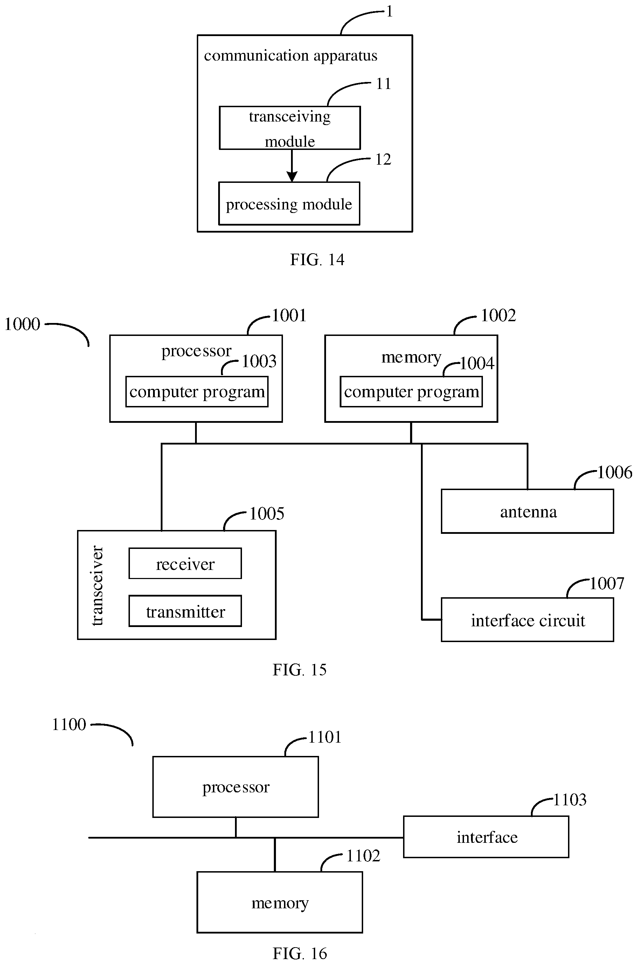

Referring to FIG. 14, FIG. 14 is a schematic block diagram illustrating a communication apparatus 1 according to embodiments of the present invention. The communication apparatus 1 shown in FIG. 14 may include a transceiving module 11 and a processing module 12. The transceiving module 11 may include a transmitting module and/or a receiving module. The transmitting module is configured to implement a transmitting function, and the receiving module is configured to implement a receiving function. The transceiving module 701 may implement the transmitting function and/or the receiving function.

The communication apparatus 1 may be the terminal, a device in the terminal, or a device that may be matched for use with the terminal. Alternatively, the communication apparatus 1 may be the network device, a device in the network device, or a device that may be matched for use with the network device.

For the case where the communication apparatus 1 is the terminal, the transceiving module 11 is configured to receive the first configuration information from the network device, where the first configuration information indicates the at least one CBRA configuration in the first version; and the processing module 12 is configured to determine the target available RO set according to the first configuration information; and/or determine the target shared RO resource according to the first configuration information; and/or determine the target preamble set according to the first configuration information.

For the case where the communication apparatus 1 is the network device, the transceiving module 11 is configured to send the first configuration information, where the first configuration information indicates the at least one CBRA configuration in the first version.

Referring to FIG. 15, FIG. 15 is a schematic block diagram illustrating a communication device 1000 according to embodiments of the present invention. The communication device 1000 may be the network device or the terminal, or may be a chip, a chip system, or a processor supporting the network device to implement the above-mentioned method, or may be a chip, a chip system or a processor supporting the terminal to implement the above-mentioned method. The communication device 1000 may be used to implement the methods as described in the method embodiments described above, and details may be referred to the description of the method embodiments described above.

The communication device 1000 may be the network device or the terminal, or may be a chip, a chip system, or a processor supporting the network device to implement the above-mentioned method, or may be a chip, a chip system or a processor supporting the terminal to implement the above-mentioned method. The device may be used to implement the methods as described in the method embodiments described above, and details may be referred to the description of the method embodiments described above.

The communication device 1000 may include one or more processors 1001. The processor 1001 may be a general-purpose processor or a special-purpose processor, etc. It may be, for example, a baseband processor or a central processor. The baseband processor may be used to process a communication protocol and communication data, and the central processor may be used to control a communication device (such as a base station, a baseband chip, a terminal device, a terminal device chip, a DU or a CU, etc.), execute a computer program, and process data of the computer program.

Optionally, the communication device 1000 may further include one or more memories 1002 on which the computer program 1004 may be stored, and the memory 1002 executes the computer program 1004 to cause the communication device 1000 to perform the method as described in the above method embodiments. Optionally, the memory 1002 may also have data stored therein. The communication device 1000 and the memory 1002 may be provided independently or integrated together.

Optionally, the communication device 1000 may further include a transceiver 1005 and an antenna 1006. The transceiver 1005 may be referred to as a transceiving unit, a transceiving machine, or a transceiving circuit or the like for implementing a transceiving function. The transceiver 1005 may include a receiver and a transmitter, the receiver may be referred to as a receiving machine, a receiving circuit or the like for implementing a receiving function; and the transmitter may be referred to as a transmitting machine, a transmission circuit or the like for implementing a transmission function.

Optionally, the communication device 1000 may further include one or more interface circuits 1007. The interface circuit 1007 is configured to receive and transmit a code instruction to the processor 1001. The processor 1001 executes the code instruction to enable the communication device 1000 to perform the method described in any of the above method embodiments.

In the case where the communication device 1000 is the terminal, the transceiver 1005 is configured to perform S21 in FIG. 2, S31 in FIG. 3, S41 in FIG. 4, S51 in FIG. 5, S61 in FIG. 6, and S71 in FIG. 7. The processor 1001 is configured to perform S22 in FIG. 2, S32 in FIG. 3, S42 in FIG. 4, S52 in FIG. 5, S62 in FIG. 6, and S72 in FIG. 7.

In the case where the communication device 1000 is the network device, the transceiver 1005 is configured to perform S81 in FIG. 8, S91 in FIG. 9, S101 in FIG. 10, S111 in FIG. 11, S121 in FIG. 12 and S131 in FIG. 13.

In an implementation, the processor 1001 may include the transceiver for implementing the receiving and transmitting functions. For example, the transceiver may be a transceiving circuit, an interface, or an interface circuit. The transceiving circuit, the interface, or the interface circuit for implementing the receiving and transmitting functions may be separate or integrated. The transceiving circuit, the interface or the interface circuit may be configured to read and write code/data, or may be configured to transmit or transfer signals.

In an implementation, the processor 1001 may store the computer program 1003 that, when run on the processor 1001, enables the communication device 1000 to perform the method described in any of the above method embodiments. The computer program 1003 may be solidified in the processor 1001, in which case the processor 1001 may be implemented in hardware.

In an implementation, the communication device 1000 may include a circuit that may perform the transmitting, receiving or communicating functions in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be the network device or the terminal, but the scope of the communication device described in the present invention is not limited thereto. The structure of the communication device may not be limited by FIG. 15. The communication device may be a stand-alone device or may be part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

In the case where the communication device may be a chip or a chip system, reference is made to FIG. 16, which is a block diagram of a chip provided in embodiments of the present invention.

The chip 1100 includes a processor 1101 and an interface 1103. The number of processors 1101 may be one or more and the number of interfaces 1103 may be more than one.

In a case where the chip is configured to realize the functions of the terminal in embodiments of the present invention, the interface 1103 is configured to receive and transmit code instructions to the processor. The processor 1101 is configured to execute code instructions to perform the method for determining the resource as described in some embodiments above.

In a case where the chip is configured to realize the functions of the network device in embodiments of the present invention, the interface 1103 is configured to receive and transmit code instructions to the processor. The processor 1101 is configured to execute code instructions to perform the method for determining the resource as described in some embodiments above.

Optionally, the chip 1100 further includes a memory 1102 for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

Embodiments of the present invention further provide a system for resource configuration. The system includes the communication apparatus as the terminal and the communication apparatus as the network device as shown in the embodiments of FIG. 14. Alternatively, the system includes the communication device as the terminal and the communication device as the terminal as shown in the embodiments of FIG. 15.

The present invention further provides a readable storage medium having stored therein instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of' may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made according to the above table. The names of parameters shown in the titles of the above tables may also adopt other names understandable by the communication apparatus/device, and the values or representations of the parameters may also be other values or representations understandable by the communication apparatus/device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for determining a resource, performed by a terminal, comprising:
receiving first configuration information from a network device, wherein the first configuration information indicates at least one contention-based random access (CBRA) configuration in a first version;
and
determining a target available random access channel occasion (RO) set according to the first configuration information; and/or
determining a target shared RO resource according to the first configuration information; and/or
determining a target preamble set according to the first configuration information.

2. The method of claim 1, wherein the CBRA configuration in the first version comprises: a 4-step CBRA configuration in the first version and/or a 2-step CBRA configuration in the first version, wherein the first version is Release 17.

3. The method of claim 1 or 2, wherein determining the target available RO set comprises:
determining a first available RO set configured in the CBRA configuration in the first version as the target available RO set.

4. The method of claim 1 or 2, wherein determining the target available RO set comprises:
in response to determining that the target available RO set being not configured in the CBRA configuration in the first version,
determining, by the terminal, a second available RO set that is multiplexed, and determining the target available RO set according to the multiplexed second available RO set.

5. The method of claim 4, wherein the second available RO set is at least one of:
an available RO set configured in the at least one CBRA configuration in the first version;
an available RO set configured in at least one CBRA configuration in a second version, wherein the second version is Release 15 and/or Release 16.

6. The method of claim 4 or 5, further comprising:
determining the target RO set according to a first shared RO resource and the second available RO set in response to determining that the terminal determines the first shared RO resource according to second configuration information or a protocol provision configured by the network device;
determining, by the terminal, the multiplexed second available RO set as the target available RO set in response to determining that the first shared RO resource is not determined by the terminal.

7. The method of any one of claims 1 to 6, wherein determining the target shared RO resource comprises:
determining, by the terminal, that a third available RO set is configured in the CBRA configuration in the first version; and
determining the target shared RO resource according to the target available RO set and the third available RO set.

8. The method of any one of claims 1 to 6, wherein determining the target shared RO resource comprises:
determining, by the terminal, the target shared RO resource according to a second shared RO resource in response to determining that the second shared RO resource is configured in the CBRA configuration in the first version; or
determining, by the terminal, that the target shared RO resource is null in response to determining that the second shared RO resource is not configured in the CBRA configuration in the first version.

9. The method of any one of claims 1 to 8, wherein the CBRA configuration in the first version is a common CBRA configuration of a plurality of different features or combinations of features in the first version or a specific CBRA configuration of a plurality of different features or combinations of features in the first version, and wherein the common CBRA configuration at least comprises a configuration of the target shared RO resource and/or a configuration of the target available RO set.

10. The method of claim 9, further comprising:
determining a target available RO set corresponding to the features or the combinations of features according to a third available RO set corresponding to the features or the combinations of features in response to determining that the CBRA configuration in the first version is the common CBRA configuration.

11. The method of claim 10, further comprising:
adapting the target available RO set of the CBRA configuration in the first version to at least one of the features or the combinations of features in response to determining that the CBRA configuration in the first version is the specific CBRA configuration of the plurality of different features or the combinations of features in the first version.

12. The method of any one of claims 1 to 11, wherein determining the target preamble set comprises:
determining that, in the CBRA configuration in the first version, a number of preambles of a CBRA configuration having a shared RO resource with the CBRA configuration is configured, wherein the number of preambles in the CBRA configuration having the shared RO resource comprises at least one of:
a number of preambles of a 2-step CBRA configuration in a second version;
a number of preambles of a 4-step CBRA configuration in the second version;
a number of preambles of a 2-step CBRA configuration in the first version; or
a number of preambles of a 4-step CBRA configuration in the first version; and
determining the target preamble set in the target shared RO resource according to the number of preambles in the CBRA configuration.

13. The method of claim 12, wherein determining the target preamble set in the target shared RO resource comprises:
determining that a starting position of the target preamble set is located after a preamble set of the 4-step CBRA configuration in the second version in response to determining that the CBRA configuration in the first version has a common available RO set with the 4-step CBRA configuration in the second version.

14. The method of claim 12, wherein determining the target preamble set in the target shared RO resource comprises:
determining that a starting position of the target preamble set is located after a preamble set of the 2-step CBRA configuration in the second version in response to determining that the CBRA configuration in the first version has a common available RO set with the 2-step CBRA in the second version.

15. The method of claim 12, wherein determining the target preamble set in the target shared RO resource comprises:
determining that a starting position of a preamble set of the 2-step CBRA in the first version is located after a preamble set of the 4-step CBRA in the first version in response to determining that the 2-step CBRA in the first version in the CBRA configuration of the first version has a common available RO set with the 4-step CBRA in the first version.

16. A method for determining a resource, performed by a network device, comprising:
sending first configuration information, wherein the first configuration information indicates at least one contention-based random access (CBRA) configuration in a first version.

17. The method of claim 16, wherein the CBRA configuration in the first version comprises: a 4-step CBRA configuration in the first version and/or a 2-step CBRA configuration in the first version, wherein the first version is Release 17.

18. The method of claim 16 or 17, wherein the CBRA configuration in the first version is configured with a first available random access channel occasion (RO) set as a target available RO set for a terminal.

19. The method of claim 16 or 17, wherein the CBRA configuration in the first version is not configured with a target available RO set for the terminal; and
the CBRA configuration in the first version is configured with a second available RO set that is multiplexed by the terminal as the target available RO set.

20. The method of claim 19, wherein the second available RO set is at least one of:
an available RO set configured in the at least one CBRA configuration in the first version;
an available RO set configured in at least one CBRA configuration in a second version, wherein the second version is Release 15 and/or Release 16.

21. The method of claim 19 or 20, further comprising:
sending second configuration information, wherein the second configuration information indicates a first shared RO resource for determining, by the terminal, the target available RO set according to the second available RO set.

22. The method of any one of claims 16 to 21, wherein the CBRA configuration in the first version is configured with a third available RO set for determining, by the terminal, a target shared RO resource according to the target available RO set.

23. The method of any one of claims 16 to 21, wherein the CBRA configuration in the first version is configured with a second shared RO resource for determining, by the terminal, the target shared RO resource.

24. The method of any one of claims 16 to 23, wherein the CBRA configuration in the first version is a common CBRA configuration of a plurality of different features or combinations of features in the first version or a specific CBRA configuration of a plurality of different features or the combinations of features in the first version, and wherein the common CBRA configuration at least comprises a configuration of the target shared RO resource and/or a configuration of the target available RO set.

25. The method of claim 24, wherein in the CBRA configuration in the first version, a number of preambles in a CBRA configuration having a shared RO resource with the CBRA configuration is configured, wherein the number of preambles in the CBRA configuration having the shared RO resource comprises at least one of:
a number of preambles of a 2-step CBRA configuration in a second version;
a number of preambles of a 4-step CBRA configuration in the second version;
a number of preambles of a 2-step CBRA configuration in the first version; or
a number of preambles of a 4-step CBRA configuration in the first version.

26. A communication apparatus, comprising:
a transceiving module configured to receive first configuration information from a network device, wherein the first configuration information indicates at least one contention-based random access (CBRA) configuration in a first version; and
a processing module configured to determine a target available random access channel occasion (RO) set according to the first configuration information; and/or determine a target shared RO resource according to the first configuration information; and/or determine a target preamble set according to the first configuration information.

27. A communication apparatus, comprising:
a transceiving module configured to send first configuration information, wherein the first configuration information indicates at least one contention-based random access (CBRA) configuration in a first version.

28. A communication device, comprising:
a processor; and
a memory for storing a computer program;
wherein the processor is configured to perform the computer program stored in the memory to enable the communication device to implement the method of any one of claims 1 to 15.

29. A communication device, comprising:
a processor; and
a memory for storing a computer program;
wherein the processor is configured to perform the computer program stored in the memory to enable the communication device to implement the method of any one of claims 16 to 25.

30. A communication device, comprising: a processor and an interface circuit,
wherein the interface circuit is configured to receive code instructions and transmit the code instructions to the processor; and
the processor is configured to execute the code instructions to perform the method of any one of claims 1 to 15.

31. A communication device, comprising: a processor and an interface circuit,
wherein the interface circuit is configured to receive code instructions and transmit the code instructions to the processor; and
the processor is configured to execute the code instructions to perform the method of any one of claims 16 to 25.

32. A computer readable storage medium having stored therein instructions that, when executed, implement the method of any one of claims 1 to 15.

33. A computer readable storage medium having stored therein instructions that, when executed, implement the method of any one of claims 16 to 25.
